# EUROPÄISCHE PATENTANMELDUNG

(11) **EP 3 885 797 A1**
(43) Veröffentlichungstag der Anmeldung: **29.09.2021**
(21) Anmeldenummer: 20165525.5
(22) Anmeldetag: 25.03.2020
(51) Int. Cl.: G01S 17/931, G01S 17/42, G01S 7/484, G01S 7/486

(54) **FAHRZEUGUMFELDERFASSUNGSSYSTEM MIT VARIABLEM SICHTFELD**

(71) Anmelder: ZKW Group GmbH, 3250 Wieselburg (AT)
(72) Erfinder: Reiter, Thomas, 3325 Ferschitz (AT); Pitterle, Georg, 3241 Kirnberg an der Mank (AT)
(74) Vertreter: Patentanwaltskanzlei Matschnig & Forsthuber OG

(57) **Zusammenfassung**

Die Erfindung betrifft ein Fahrzeugumfelderfassungssystem (1) mit variablem Sichtfeld, aufweisend
- eine Umfelderfassungsvorrichtung (2) und
- eine Steuerungseinrichtung (3) zur Ansteuerung der Umfelderfassungsvorrichtung (2),
wobei die Umfelderfassungsvorrichtung (2)
• eine Sendeeinrichtung (2a) zur Abstrahlung von elektromagnetischen Wellen in einen zu erfassenden Bereich einer Fahrzeugumgebung, sowie
• eine Sensoreinheit (2b) zum Empfang der von der Fahrzeugumgebung reflektierten elektromagnetischen Wellen aufweist,
wobei die Sendeeinrichtung (2a) zur wechselweisen Bestrahlung eines ersten Sichtfeldes in Form eines Nahfeldes (NF) im Rahmen eines Nahfeldbetriebs und eines zweiten Sichtfeldes in Form eines Fernfeldes (FF) im Rahmen eines Fernfeldbetriebs eingerichtet ist, wobei das Fernfeld (FF) hinsichtlich des erfassten Raumwinkels gegenüber dem Nahfeld (NF) um zumindest 50% reduziert ist, dadurch gekennzeichnet, dass die Sendeeinrichtung (2a) eine durch die Steuerungseinrichtung (3) vorkonfigurierbare durchschnittliche erste Sendeleistung (PNF) aufweist, und dazu eingerichtet ist, diese erste Sendeleistung (PNF) bei Bestrahlung des Nahfeldes (NF) abzugeben und bei Bestrahlung des Fernfeldes (FF) eine Sendeleistung zumindest im Ausmaß der ersten Sendeleistung (PNF) abzugeben, und somit die Strahlstärke bei Beleuchtung des Fernfeldes (FF) gegenüber der Beleuchtung des Nahfeldes (NF) zu erhöhen, wobei die Steuerungseinrichtung (3) zur Steuerung des Wechsels zwischen der Bestrahlung des Nahfeldes (NF) und des Fernfeldes (FF) eingerichtet ist.

## Beschreibung

Die Erfindung betrifft ein Fahrzeugumfelderfassungssystem mit variablem Sichtfeld, aufweisend eine Umfelderfassungsvorrichtung und eine Steuerungseinrichtung zur Ansteuerung der Umfelderfassungsvorrichtung, wobei die Umfelderfassungsvorrichtung eine Sendeeinrichtung zur Abstrahlung von elektromagnetischen Wellen in einen zu erfassenden Bereich einer Fahrzeugumgebung, sowie eine Sensoreinheit zum Empfang der von der Fahrzeugumgebung reflektierten elektromagnetischen Wellen aufweist, wobei die Sendeeinrichtung zur wechselweisen Bestrahlung eines ersten Sichtfeldes in Form eines Nahfeldes im Rahmen eines Nahfeldbetriebs und eines zweiten Sichtfeldes in Form eines Fernfeldes im Rahmen eines Fernfeldbetriebs eingerichtet ist, wobei das Fernfeld hinsichtlich des erfassten Raumwinkels gegenüber dem Nahfeld um zumindest 50% reduziert ist.

Die Erfindung betrifft weiters einen Fahrzeugscheinwerfer umfassend ein erfindungsgemäßes Fahrzeugumfelderfassungssystem sowie ein Fahrzeug umfassend ein erfindungsgemäßes Fahrzeugumfelderfassungssystem oder einen erfindungsgemäßen Fahrzeugscheinwerfer.

Aus dem Stand der Technik sind Fahrzeugumfelderfassungssysteme bekannt geworden, die eine Vielzahl an Sensoren aufweisen, mit denen ein Fahrzeugumgebung möglichst vollständig und zuverlässig erkannt werden soll. Obwohl grundsätzlich der Einsatz mehrerer voneinander unabhängiger Sensoren zu begrüßen ist, bestehen in der Regel Einschränkungen hinsichtlich der räumlichen Anordnung der Sensoren sowie der Kosten, die einen wirtschaftlichen Einsatz der Sensoren ermöglichen.

In Abhängigkeit von der jeweiligen Fahrsituation können sich die Anforderungen an ein Fahrzeugumfelderfassungssystem deutlich verändern. Eine Sensorkonfiguration, die beispielsweise für einen mit geringer Fahrgeschwindigkeit erfolgenden Parkvorgang optimiert ist, kann in der Regel kaum nutzbare Informationen für Hochgeschwindigkeitsanwendungen, wie beispielsweise Fahrassistenzsysteme für Fahren mit höherer Geschwindigkeit auf Autobahnen, liefern. Deshalb bestand bisher die Notwendigkeit, Fahrzeugumfelderfassungssysteme mit einer Vielzahl an Sensoren auszustatten.

Eine Aufgabe der Erfindung besteht daher darin, die Nachteile des Standes der Technik zu beheben.

Diese Aufgabe wird mit einem Fahrzeugumfelderfassungssystem der eingangs genannten Art gelöst, indem erfindungsgemäß die Sendeeinrichtung eine durch die Steuerungseinrichtung vorkonfigurierbare durchschnittliche erste Sendeleistung aufweist, und dazu eingerichtet ist, diese erste Sendeleistung bei Bestrahlung des Nahfeldes abzugeben und bei Bestrahlung des Fernfeldes eine Sendeleistung zumindest im Ausmaß der ersten Sendeleistung abzugeben, und somit die Strahlstärke bei Beleuchtung des Fernfeldes gegenüber der Beleuchtung des Nahfeldes zu erhöhen, wobei die Steuerungseinrichtung zur Steuerung des Wechsels zwischen der Bestrahlung des Nahfeldes und des Fernfeldes eingerichtet ist.

Auf diese Weise kann die Sensoreinheit sowohl Nahfeldinformationen als auch Fernfeldinformationen erfassen, wobei die Intensität der aus dem Fernfeld reflektierten Signale gegenüber den Signalen aus dem Nahfeld kaum reduziert ist, da die Sendeeinrichtung zumindest jene Sendeleistung, die zuvor in den größeren Raumwinkel des Nahfeldes abgestrahlt wurde, nun auf den reduzierten Raumwinkel des Fernfeldes konzentriert abstrahlt. Die Strahlstärke, gemessen in Leistung pro Raumwinkel (z.B. Watt/sr) ist dadurch bei der Fernfeldanwendung erhöht, wodurch die typischerweise deutlich größeren Meßentfernungen und damit verbundene Signalverluste ausgeglichen werden können. Die Erfindung macht sich daher die Erkenntnis zu Nutze, dass eine gleichzeitige Nahfeld- und Fernfeldmessung in vielen Situationen entfallen kann. Durch die Erfindung ist daher eine Sensoranordnung sowohl für die Fernfeld- als auch für die Nahfelderfassung optimal einsetzbar, indem diese situationsspezifisch angesteuert wird. Dadurch kann die Anzahl der einzusetzenden Sensoren reduziert werden. Zudem kann die Sendeleistung bestehender Systeme optimal ausgenutzt werden, indem die vorhandene Systemleistung anwendungsspezifisch eingesetzt wird. Eine lokale Erhöhung der Strahlstärke setzt dadurch keine Erhöhung der Sendeleistung des Gesamtsystems voraus. Es bedarf daher keiner leistungsstärkeren Komponenten.

Insbesondere kann vorgesehen sein, dass die Sendeeinrichtung zusätzlich zur Abstrahlung einer über die durchschnittliche erste Sendeleistung hinausgehende höhere durchschnittliche zweite Sendeleistung eingerichtet ist, wobei die Steuerungseinrichtung bei Bestrahlung des Fernfeldes die Sendeeinrichtung zur Abgabe der zweiten Sendeleistung veranlasst. Die zweite Sendeleistung kann beispielsweise das Doppelte der ersten Sendeleistung betragen. Durch Erhöhen der zweiten Sendeleistung gegenüber der ersten Sendeleistung kann die Signalqualität bei der Fernfeldmessung zusätzlich erhöht werden. Die Verbesserung dieser Signalqualität kann beispielsweise zur Erhöhung der erfassten Auflösung oder auch zur Erhöhung der Reichweite der Messung eingesetzt werden.

Weiters kann vorgesehen sein, dass die Steuerungseinrichtung zur Ansteuerung der Umfelderfassungsvorrichtung eine Schnittstelle aufweist, mit der der Steuerungseinrichtung Fahrzeugdaten zuführbar sind, wobei diese Daten die aktuelle Fahrgeschwindigkeit umfassen, und die Steuerungseinrichtung dazu eingerichtet ist, einen Wechsel zwischen Nahfeldbetrieb und des Fernfeldbetrieb in Abhängigkeit von der Fahrgeschwindigkeit festzulegen. Auf diese Weise kann ein Wechsel zwischen der Nahfeld- und der Fernfelderfassung automatisiert erfolgen. Insbesondere kann vorgesehen sein, dass die Steuerungseinrichtung dazu eingerichtet ist, bei Feststellen des Unterschreitens einer Mindestgeschwindigkeit die Sendeeinrichtung in den Nahfeldbetrieb zu versetzen und bei Überschreiten der Mindestgeschwindigkeit die Sendeeinrichtung in den Fernfeldbetrieb zu versetzen.

Weiters kann vorgesehen sein, dass die Sendeeinrichtung eine Laser-Lichtquelle, eine Infrarot-Lichtquelle oder eine LED-Lichtquelle umfasst. Das ausgesendete und/oder erfasste Spektrum kann sowohl sichtbares Licht als auch unsichtbares Licht, beispielsweise im Bereich der UV-Strahlung, umfassend. Grundsätzlich kann bei der Erfindung Lidartechnologie, NIR/FIR/MS/SWiR, Kameratechnologie etc. eingesetzt werden.

Insbesondere kann vorgesehen sein, dass die Umfelderfassungsvorrichtung dazu eingerichtet ist, dass jeweils beleuchtete Sichtfeld mit einer Bildwiederholrate von zumindest 10 Hz, vorzugsweise von zumindest 20 Hz, besonders bevorzugt von zumindest 40 Hz zu bestrahlen und zu erfassen. Die Senderate der Sendeeinheit erfolgt dabei typischerweise mit deutlich höheren Frequenzen, beispielsweise im Bereich von Kilo oder Megahertz. Um den Signalrauschabstand zu minimieren, ist die Abtastrate Empfang hingegen niederfrequent, wodurch die Erfassungsgenauigkeit deutlich erhöht werden kann. Die Bildwiederholrate kann beispielsweise maximal 500 Hz betragen. Grundsätzlich ist eine hohe Bildrate von Vorteil, da damit Änderungen der Umgebung rasch erfasst werden kann, allerdings wird mit steigender Bildwiederholrate des Signalrauschabstand schlechter, weshalb für jeden Anwendungsfall versucht wird, ein optimales Verhältnis zwischen Signalrauschabstand und Bildwiederholrate zu wählen.

Weiters kann vorgesehen sein, dass die Umfelderfassungsvorrichtung dazu eingerichtet ist, die Bildwiederholrate im Fernfeldbetrieb gegenüber der Bildwiederholrate im Nahfeldbetrieb abzusenken, insbesondere zumindest zu halbieren. Auf diese Weise kann der Signalrauschabstand deutlich reduziert werden, da die Anzahl der Signalpulse, die innerhalb der Zeitdauer der Stellung eines Bildes eingehen, erhöht wird. Die erhöhte Zeitdauer der Stellung eines Bildes ist bei der Erfassung des Nahfelde typischerweise kein Problem, insbesondere, wenn diese Erfassung bei niedrigen Fahrgeschwindigkeiten erfolgt.

Insbesondere kann vorgesehen sein, dass der Raumwinkel des Fernfeldes gegenüber dem Raumwinkel des Nahfeldes in horizontaler Richtung reduziert ist. Die Angabe von Richtungen bezieht sich immer auf die Einbaulage des Fahrzeugumfelderfassungssystems. Die Reduktion kann beispielsweise 50%, insbesondere 75% betragen.

Weiters kann vorgesehen sein, dass der Raumwinkel des Fernfeldes gegenüber dem Raumwinkel des Nahfeldes in vertikaler Richtung reduziert ist. Die Reduktion kann beispielsweise 50%, insbesondere 75% betragen.

Durch Reduktion des Raumwinkels wird die Sichtfeldgröße des Sensors effektiv reduziert. Diese Reduktion kann genutzt werden, um die erfasste Auflösung in diesem Bereich zu erhöhen, oder auch - wie bereits erwähnt - die Abtastrate in dem erfassten Bereich zu erhöhen.

Der horizontale Öffnungswinkel kann z.B. bei der Fernfeldmessung zwischen -15 bis +15° liegen, also in Summe 30° betragen, wohingegen dieser beim Nahfeldmessbereich z.B. -90° bis +30° betragen kann, also in Summe 120° umfassen kann.

Insbesondere kann vorgesehen sein, dass die Umfelderfassungsvorrichtung dazu eingerichtet ist, die Sendeleistung bei Bestrahlung des Fernfeldes innerhalb des Fernfeldes zu variieren, indem die Strahlstärke im Zentrum erhöht und in den Randbereichen gesenkt wird. Dies ist zum Beispiel günstig, wenn in dem Zentrum der Straßenverlauf einer Autobahn liegt. Dieser Bereich kann in diesem Fall besonders genau und mit gutem Signalrauschabstand erfasst werden, wohingegen den Autobahnbereich umgebende Abschnitte, wie beispielsweise durch Leitplanken getrennte Felder oder Wälder mit niedrigerer Signalqualität erfasst werden. Weiters kann vorgesehen sein, dass die Strahlstärke in vertikaler Richtung variiert wird, indem diese von einem Randbereich hin zu dem Zentrum des Fernfeldes zunimmt, wobei die Strahlstärke im Zentrum zumindest den doppelten Wert der Strahlstärke im Randbereich des Fernfeldes annimmt.

Insbesondere kann vorgesehen sein, dass das Fahrzeugumfelderfassungssystem ferner eine Recheneinheit aufweist, die mit der Steuerungseinrichtung verbunden ist, wobei die Recheneinheit zur Ausführung von Programmcode eingerichtet ist, mittels welchem die abgestrahlte Leistung der Sendeeinrichtung und/oder das zu bestrahlende Sichtfeld einstellbar ist. Auf diese Weise kann das Fahrzeugumfelderfassungssystem auf einfache Art durch Software gesteuert werden.

Weiters kann vorgesehen sein, dass das Fahrzeugumfelderfassungssystem zur Erfassung von Personen in der Fahrzeugumgebung und zur Berechnung des Abstandes hin zu den Personen eingerichtet ist, wobei bei Unterschreiten eines Mindestabstandes die abgestrahlte Leistung der Sendeeinrichtung hin zu einem Sicherheitswert begrenzt wird. Auf diese Weise kann beispielsweise verhindert werden, dass eine Erhöhung der Strahlstärke im Fernfeldbetrieb zu einer Schädigung von im Nahfeld befindlichen Personen führen kann, da im Falle des Vorhandenseins von Personen im Nahfeld der Fernfeldbetrieb automatisch eingestellt werden kann.

Weiters betrifft die Erfindung einen Fahrzeugscheinwerfer umfassend ein erfindungsgemäßes Fahrzeugumfelderfassungssystem.

Weiters betrifft die Erfindung ein Fahrzeug umfassend ein erfindungsgemäßes Fahrzeugumfelderfassungssystem oder einen erfindungsgemäßen Fahrzeugscheinwerfer.

Vorzugsweise wird das Fahrzeugumfelderfassungssystem in einem Scheinwerfer eingesetzt, da hier gute Einbauvoraussetzungen gegeben sind. Grundsätzlich könnte das System auch in einem Kühlergrill, einer Heckleuchte, hinter der Windschutzscheibe, in einem Stoßfänger etc. angeordnet sein.

Die Erfindung erlaubt es einen Kompromiss zwischen den Erfordernissen hinsichtlich der Kosten, der Bauform, der Performance (Reichweite, Sichtfeld, Winkelauflösung, Strahldivergenz, Wiederholrate, Signalrauschabstand) und Augensicherheit zu finden.

In anderen Worten kann die Erfindung wie folgt beschrieben werden:
Die Erfindung ermöglicht es, ein System zu liefern, das die Aufgaben eines Kurz- und Lang-Distanzsensors gleichzeitig übernimmt. Dadurch kann das Sichtfeld und vor allem die Reichweite an die jeweilige Fahrsituation angepasst werden. Die Erfindung ermöglicht daher eine situative Strahlanpassung für aktive Sensoren.

Durch Verringerung des Sichtfeldes, anpassen der Wiederholrate bzw. durch eine Änderung der Strahlform kann die Reichweite je nach Fahrsituation angepasst werden. Dies kann durch eine Freigabe aufgrund der Geschwindigkeit und des Sensors geschehen, um die Augensicherheit, insbesondere einen Sicherheitsabstand einzuhalten.

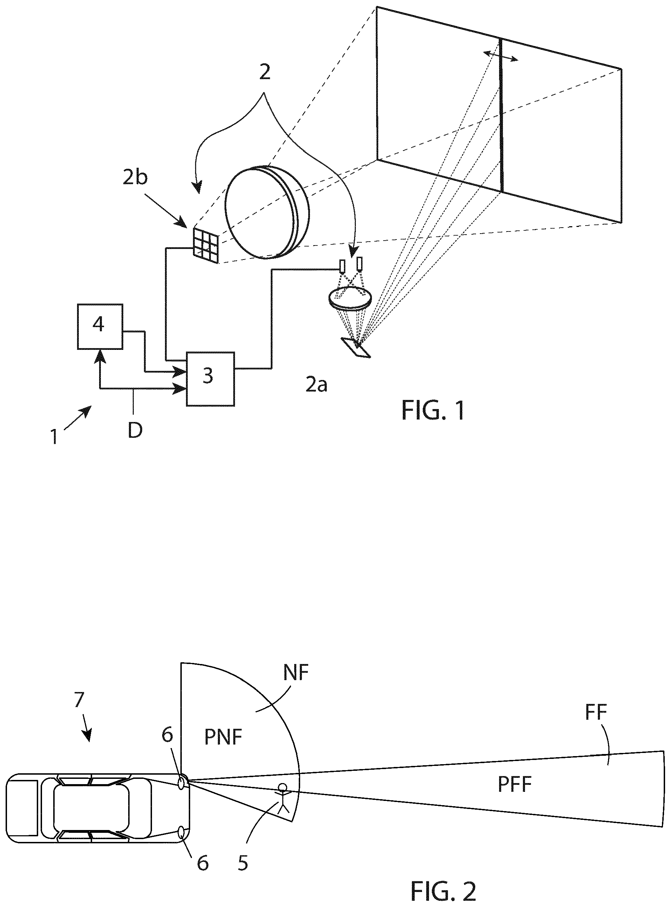

Hierzu können die folgenden Merkmale vorgesehen sein:
- Sichtfeldreduktion (ROI - Region Of Interest): Dies kann in einem aktiven System durch zeitliche Musterveränderung des Sendesignals zum Strahlablenker (Rotierender Spiegel, MEMS, OPA, Oszillierender Einheit) geschehen bzw. ist auch eine Veränderung des Winkelbereiches denkbar (z.B.: +/- 15° bzw. +/- 8° bei einem MEMS). Durch eine Verringerung des Sichtfeldes von 120° auf 30° würde somit eine 4-mal höhere Pulsanazahl zur Verfügung stehen. Im Falle des Einsatzes eines Lasers kann das System durch den max. zulässigen Dutycycle des Lasers (z.B.: 0,1%) eingeschränkt sein.
- Wiederholrate anpassen: Eine weitere Reichweitenverbesserung ist durch die Erhöhung der Pulsanzahl erzielbar indem die Wiederholrate reduziert wird. Durch eine Mittelwertbildung wird der Signalrauschabstand erhöht und der Sensor dadurch unempfindlicher gegenüber Störeinflüssen.
- Strahlformung: Durch Anpassung der vertikalen Abstrahlcharakteristik ist es möglich die Sendeleistung besser zu nutzen. Dies geschieht indem für Bereiche, welche nur bei kurzen Distanzen illuminiert werden müssen (oberer und unterer Bereich) weniger Sendeleistung zur Verfügung gestellt wird, um mehr Leistung im Zentralbereich nutzbar zu machen. Wird ein hybrid scannender Ansatz (siehe Abbildung 2) als Sendesignal gewählt (vertikale Linie wird horizontal gescannt), können die vertikalen Anteile der einzelnen Laser unterschiedlich groß gewählt werden. Dadurch kann die Sendeleistung im Zentralbereich stark erhöht werden, ohne die Gesamtleistung zu erhöhen.

Die Sichtfeldreduktion, das Anpassen der Wiederholrate und die Strahlformung können via Software eingestellt und gesteuert werden. Die genaue Ausrichtung des Sensors kann zusätzlich kundenspezifisch durch einen Parameter eingestellt und kalibriert werden. Zusätzlich ist es auch denkbar den Strahlkegel ähnlich einem Kurvenlicht zu führen um fahrsituationsrelevante Bereiche genauer zu erfassen.

Ein softwareseitiger Sicherheitsmechanismus kann vorgesehen sein, welcher folgende Funktionen übernimmt:
- Freigabe zur Erhöhung der Sendeleistung:
   o Ab einer zu definierenden Geschwindigkeit kann der Sicherheitsabstand erhöht werden (z.B.: 10 cm bei 0 km/h, 50 cm ab 30 km/h, 200 cm ab 80 km/h), somit kann die Intensität durch eine der 3 Maßnahmen (siehe 2.6) erhöht werden. Als Freigabemaßnahme dürfen die zuvor ermittelten Distanzen keine Unterschreitung des angeforderten neuen Sicherheitsabstandes aufweisen.
- Reduktion der Sendeleistung:
   o Nähert sich ein Objekt dem Sensor welcher kritisch bzgl. dem freigegebenen Sicherheitsabstand ist, so ist die Sendeleistung zu reduzieren und dem übergeordneten Steuergerät dies mitzuteilen.

Folgende Vorteile können durch die Erfindung ermöglicht werden:
- Ein aktiver Sensor, welcher je nach Anwendungsfall die Aufgabe für kurze und lange Distanzen übernehmen kann,
- Enorme Performancesteigerung in Form von Reichweitenerhöhung im Betrieb durch Software (kein mechanisches System notwendig)
- Kundenspezifische Änderungen an die Performance, Ausrichtung und Kalibrierung via Software (Nutzung von Gleichteilen, Stichwort Modul)

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines erfindungsgemäßen Fahrzeugumfelderfassungssystems,
Figur 2 eine Darstellung von Anwendungssituationen des erfindungsgemäßen Fahrzeugumfelderfassungssystems, das in einen Fahrzeugscheinwerfer verbaut ist, und
Figur 3 Darstellungen des räumlichen Verlaufes der Strahlstärke der Sendeeinrichtung.

In den folgenden Figuren bezeichnen - sofern nicht anders angegeben - gleiche Bezugszeichen gleiche Merkmale.

Figur 1 zeigt eine schematische Darstellung eines erfindungsgemäßen Fahrzeugumfelderfassungssystems 1 mit variablem Sichtfeld. Dieses System 1 weist eine Umfelderfassungsvorrichtung 2 und eine Steuerungseinrichtung 3 zur Ansteuerung der Umfelderfassungsvorrichtung 2 auf. Die Umfelderfassungsvorrichtung 2 umfasst eine Sendeeinrichtung 2a zur Abstrahlung von elektromagnetischen Wellen in einen zu erfassenden Bereich einer Fahrzeugumgebung, sowie eine Sensoreinheit 2b zum Empfang der von der Fahrzeugumgebung reflektierten elektromagnetischen Wellen aufweist.

Die Sendeeinrichtung 2a ist zur wechselweisen Bestrahlung eines ersten Sichtfeldes in Form eines Nahfeldes NF (siehe Fig. 2) im Rahmen eines Nahfeldbetriebs und eines zweiten Sichtfeldes in Form eines Fernfeldes FF im Rahmen eines Fernfeldbetriebs eingerichtet. Das Fernfeld FF ist hinsichtlich des erfassten Raumwinkels gegenüber dem Nahfeld NF um zumindest 50% reduziert.

Die Sendeeinrichtung 2a weist eine durch die Steuerungseinrichtung 3 vorkonfigurierbare durchschnittliche erste Sendeleistung PNF auf und ist dazu eingerichtet, diese erste Sendeleistung PNF bei Bestrahlung des Nahfeldes NF abzugeben. Bei Bestrahlung des Fernfeldes FF wird eine Sendeleistung abgegeben, die zumindest gleich groß ist, wie die erste Sendeleistung PNF. Dadurch wird die lokale Strahlstärke bei Beleuchtung des Fernfeldes FF gegenüber der Beleuchtung des Nahfeldes NF erhöht.

Die Steuerungseinrichtung 3 ist zur Steuerung des Wechsels zwischen der Bestrahlung des Nahfeldes NF und des Fernfeldes FF eingerichtet. Vorzugsweise ist vorgesehen, dass die Sendeeinrichtung 2a zusätzlich zur Abstrahlung einer über die durchschnittliche erste Sendeleistung PNF hinausgehende höhere durchschnittliche zweite Sendeleistung PFF eingerichtet ist, wobei die Steuerungseinrichtung 3 bei Bestrahlung des Fernfeldes die Sendeeinrichtung 2a zur Abgabe der zweiten Sendeleistung PFF veranlasst. Die Sendeeinrichtung 2a kann beispielsweise durch einen Laser realisiert sein, dessen Laserstrahl mittels eines mikromechanischen Spiegels gelenkt werden kann, wie in Fig. 1 darstellt wird.

In Figur 1 ist zudem dargestellt, dass die Steuerungseinrichtung 3 zur Ansteuerung der Umfelderfassungsvorrichtung 2 eine Schnittstelle aufweist, mit der der Steuerungseinrichtung 3 Fahrzeugdaten D zuführbar sind, wobei diese Daten die aktuelle Fahrgeschwindigkeit umfassen, und die Steuerungseinrichtung 3 dazu eingerichtet ist, einen Wechsel zwischen Nahfeldbetrieb und des Fernfeldbetrieb in Abhängigkeit von der Fahrgeschwindigkeit festzulegen.

Die Steuerungseinrichtung 3 ist ferner dazu eingerichtet, bei Feststellen des Unterschreitens einer Mindestgeschwindigkeit die Sendeeinrichtung 2a in den Nahfeldbetrieb zu versetzen und bei Überschreiten der Mindestgeschwindigkeit die Sendeeinrichtung 2a in den Fernfeldbetrieb zu versetzen. Das Fahrzeugumfelderfassungssystem 1 weist ferner eine Recheneinheit 4 auf, die mit der Steuerungseinrichtung 3 verbunden ist, wobei die Recheneinheit 4 zur Ausführung von Programmcode eingerichtet ist, mittels welchem die abgestrahlte Leistung der Sendeeinrichtung 2a und/oder das zu bestrahlende Sichtfeld einstellbar ist.

Figur 2 zeigt ein Szenario, in der ein Fahrzeug 7 zwei Fahrzeugscheinwerfer 6 aufweist, wobei in diesen Fahrzeugscheinwerfern 6 jeweils ein Fahrzeugumfelderfassungssystem 1 verbaut ist. Zur besseren Übersicht ist nur das Abstrahlverhalten des linken Fahrzeugumfelderfassungssystems 1 dargestellt. Der Raumwinkel des Fernfeldes FF ist in dem vorliegenden Beispiel gegenüber dem Raumwinkel des Nahfeldes NF in horizontaler Richtung sowie in vertikaler Richtung reduziert. Das Fahrzeugumfelderfassungssystem 1 ist dabei zur Erfassung von Personen 5 in der Fahrzeugumgebung und zur Berechnung des Abstandes hin zu den Personen 5 eingerichtet, wobei bei Unterschreiten eines Mindestabstandes die abgestrahlte Leistung der Sendeeinrichtung hin zu einem Sicherheitswert begrenzt wird.

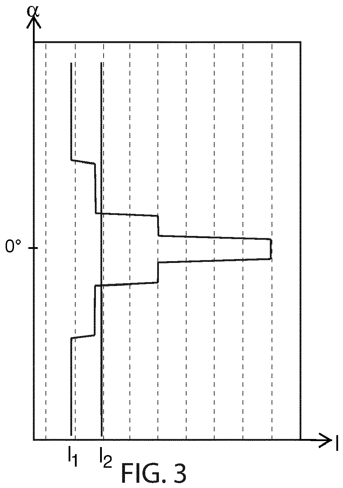

Figur 3 zeigt zwei beispielhafte räumliche Verläufe der Strahlstärke der Sendeeinrichtung 2a, nämlich in Form der Kurven I₁ und I₂. Der Verlauf der Strahlstärke I₂ ist über den gesamten Raumwinkel α (oder einen horizontalen oder vertikalen Winkelbereich) konstant. Daraus ergibt sich in der Darstellung nach Fig. 3 eine Gerade. Der Verlauf der Strahlstärke I₁ ist hingegen dergestalt ausgebildet, dass die Strahlstärke im Zentrum (in dem Bereich um den Punkt 0°) erhöht und in den Randbereichen gesenkt wird. Im vorliegenden Ausführungsbeispiel wird die Strahlstärke gestuft in mehreren Schritten erhöht. Auf diese Weise kann bei gegebener Sendeleistung durch Optimierung der Strahlstärke innerhalb der Verteilung, z.B. im Fernfeldbereich, die Umfelderfassung weiter optimiert werden.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Fahrzeugumfelderfassungssystem (1) mit variablem Sichtfeld, aufweisend
- eine Umfelderfassungsvorrichtung (2) und
- eine Steuerungseinrichtung (3) zur Ansteuerung der Umfelderfassungsvorrichtung (2), wobei die Umfelderfassungsvorrichtung (2)
• eine Sendeeinrichtung (2a) zur Abstrahlung von elektromagnetischen Wellen in einen zu erfassenden Bereich einer Fahrzeugumgebung, sowie
• eine Sensoreinheit (2b) zum Empfang der von der Fahrzeugumgebung reflektierten elektromagnetischen Wellen aufweist,
wobei die Sendeeinrichtung (2a) zur wechselweisen Bestrahlung eines ersten Sichtfeldes in Form eines Nahfeldes (NF) im Rahmen eines Nahfeldbetriebs und eines zweiten Sichtfeldes in Form eines Fernfeldes (FF) im Rahmen eines Fernfeldbetriebs eingerichtet ist, wobei das Fernfeld (FF) hinsichtlich des erfassten Raumwinkels gegenüber dem Nahfeld (NF) um zumindest 50% reduziert ist, **dadurch gekennzeichnet, dass** die Sendeeinrichtung (2a) eine durch die Steuerungseinrichtung (3) vorkonfigurierbare durchschnittliche erste Sendeleistung (PNF) aufweist, und dazu eingerichtet ist, diese erste Sendeleistung (PNF) bei Bestrahlung des Nahfeldes (NF) abzugeben und bei Bestrahlung des Fernfeldes (FF) eine Sendeleistung zumindest im Ausmaß der ersten Sendeleistung (PNF) abzugeben, und somit die Strahlstärke bei Beleuchtung des Fernfeldes (FF) gegenüber der Beleuchtung des Nahfeldes (NF) zu erhöhen, wobei die Steuerungseinrichtung (3) zur Steuerung des Wechsels zwischen der Bestrahlung des Nahfeldes (NF) und des Fernfeldes (FF) eingerichtet ist.

2. Fahrzeugumfelderfassungssystem (1) nach Anspruch 1, wobei die Sendeeinrichtung (2a) zusätzlich zur Abstrahlung einer über die durchschnittliche erste Sendeleistung (PNF) hinausgehende höhere durchschnittliche zweite Sendeleistung (PFF) eingerichtet ist, wobei die Steuerungseinrichtung (3) bei Bestrahlung des Fernfeldes die Sendeeinrichtung (2a) zur Abgabe der zweiten Sendeleistung (PFF) veranlasst.

3. Fahrzeugumfelderfassungssystem (1) nach Anspruch 1 oder 2, wobei die Steuerungseinrichtung (3) zur Ansteuerung der Umfelderfassungsvorrichtung (2) eine Schnittstelle aufweist, mit der der Steuerungseinrichtung (3) Fahrzeugdaten (D) zuführbar sind, wobei diese Daten die aktuelle Fahrgeschwindigkeit umfassen, und die Steuerungseinrichtung (3) dazu eingerichtet ist, einen Wechsel zwischen Nahfeldbetrieb und des Fernfeldbetrieb in Abhängigkeit von der Fahrgeschwindigkeit festzulegen.

4. Fahrzeugumfelderfassungssystem (1) nach Anspruch 3, wobei die Steuerungseinrichtung (3) dazu eingerichtet ist, bei Feststellen des Unterschreitens einer Mindestgeschwindigkeit die Sendeeinrichtung (2a) in den Nahfeldbetrieb zu versetzen und bei Überschreiten der Mindestgeschwindigkeit die Sendeeinrichtung (2a) in den Fernfeldbetrieb zu versetzen.

5. Fahrzeugumfelderfassungssystem (1) nach einem der vorhergehenden Ansprüche, wobei die Sendeeinrichtung (2a) eine Laser-Lichtquelle, eine Infrarot-Lichtquelle oder eine LED-Lichtquelle umfasst.

6. Fahrzeugumfelderfassungssystem (1) nach einem der vorhergehenden Ansprüche, wobei die Umfelderfassungsvorrichtung (2) dazu eingerichtet ist, das jeweils beleuchtete Sichtfeld mit einer Bildwiederholrate von zumindest 10 Hz, vorzugsweise von zumindest 20 Hz, besonders bevorzugt von zumindest 40 Hz zu bestrahlen und zu erfassen.

7. Fahrzeugumfelderfassungssystem (1) nach Anspruch 6, wobei die Umfelderfassungsvorrichtung (2) dazu eingerichtet ist, die Bildwiederholrate im Fernfeldbetrieb gegenüber der Bildwiederholrate im Nahfeldbetrieb abzusenken, insbesondere zumindest zu halbieren.

8. Fahrzeugumfelderfassungssystem (1) nach einem der vorhergehenden Ansprüche, wobei der Raumwinkel des Fernfeldes (FF) gegenüber dem Raumwinkel des Nahfeldes (NF) in horizontaler Richtung reduziert ist.

9. Fahrzeugumfelderfassungssystem (1) nach einem der vorhergehenden Ansprüche, wobei der Raumwinkel des Fernfeldes (FF) gegenüber dem Raumwinkel des Nahfeldes (NF) in vertikaler Richtung reduziert ist.

10. Fahrzeugumfelderfassungssystem (1) nach einem der vorhergehenden Ansprüche, wobei die Umfelderfassungsvorrichtung (2) dazu eingerichtet ist, die Sendeleistung bei Bestrahlung des Fernfeldes (FF) innerhalb des Fernfeldes (FF) zu variieren, indem die Strahlstärke im Zentrum erhöht und in den Randbereichen gesenkt wird.

11. Fahrzeugumfelderfassungssystem (1) nach Anspruch 10, wobei die Strahlstärke in vertikaler Richtung variiert wird, indem diese von einem Randbereich hin zu dem Zentrum des Fernfeldes zunimmt, wobei die Strahlstärke im Zentrum zumindest den doppelten Wert der Strahlstärke im Randbereich des Fernfeldes annimmt.

12. Fahrzeugumfelderfassungssystem (1) nach einem der vorhergehenden Ansprüche, wobei das Fahrzeugumfelderfassungssystem (1) ferner eine Recheneinheit (4) aufweist, die mit der Steuerungseinrichtung (3) verbunden ist, wobei die Recheneinheit (4) zur Ausführung von Programmcode eingerichtet ist, mittels welchem die abgestrahlte Leistung der Sendeeinrichtung (2a) und/oder das zu bestrahlende Sichtfeld einstellbar ist.

13. Fahrzeugumfelderfassungssystem (1) nach einem der vorhergehenden Ansprüche, wobei das Fahrzeugumfelderfassungssystem (1) zur Erfassung von Personen (5) in der Fahrzeugumgebung und zur Berechnung des Abstandes hin zu den Personen eingerichtet ist, wobei bei Unterschreiten eines Mindestabstandes die abgestrahlte Leistung der Sendeeinrichtung hin zu einem Sicherheitswert begrenzt wird.

14. Fahrzeugscheinwerfer (6), umfassend ein Fahrzeugumfelderfassungssystem (1) nach einem der vorhergehenden Ansprüche.

15. Fahrzeug (7), umfassend ein Fahrzeugumfelderfassungssystem (1) oder einen Fahrzeugscheinwerfer (6) nach einem der vorhergehenden Ansprüche.
